# EUROPEAN PATENT APPLICATION

(11) **EP 2 166 734 A1**
(43) Date of publication of application: **24.03.2010**
(21) Application number: 09011865.4
(22) Date of filing: 17.09.2009
(51) Int. Cl.: H04L 29/08, H04L 12/58

(54) **Mobile terminal and buddy information displaying method thereof**

(30) Priority: 18.09.2008 KR 20080091726
(71) Applicant: LG Electronics Inc., Seoul (KR)
(72) Inventor: Choi, Sung-Bum, Incheon (KR); Lee, Se-Hee, Hwaseong Gyeonggi-Do (KR)
(74) Representative: TER MEER - STEINMEISTER & PARTNER GbR

(57) **Abstract**

Disclosed are a buddy information displaying method upon occurrence of state information inconsistency between a mobile terminal and a server under a wireless environment and a mobile terminal using the same, wherein when an IM service is executed under a mobile environment, if state information inconsistency occurs between the mobile terminal and an IM server, an indication (e.g., gray-processing) informing that the buddy processing is in progress is appeared on a messenger of the mobile terminal and the corresponding indication is released according to a response message received from the IM server or state information received from a presence server, resulting in providing correct state information to users.

## Description

### BACKGROUND OF THE INVENTION

### 1. Field of the Invention

The present invention relates to a mobile terminal capable of effectively displaying buddy information upon a state information inconsistency between the mobile terminal and a server under a mobile environment, and a buddy information displaying method thereof.

### 2. Background of the Invention

Mobile terminals may be configured to perform various functions, for example, data and voice communication, capturing images or video, storing voice, reproducing music files via a speaker system, displaying images or video and the like. Some of mobile terminals may include an additional function of playing games, and other mobile terminals may be implemented as multimedia players. In addition, in recent time, mobile terminals can receive broadcast or multicast signals to allow viewing of video or television programs.

Furthermore, many efforts are undergoing to support or enhance various functions of such mobile terminals. Such many efforts include not only changes and improvement of structural components implementing a mobile terminal but also software or hardware improvement. Among others, a touch function of the mobile terminal allows even users, who are not familiar to input buttons or keys, to conveniently operate the mobile terminal using a touch screen. Recently, in addition to a simple touch input, such touch function is being established as an important function of the mobile terminal together with a user interface (UI).

Also, the mobile terminal can execute a presence service with a server under a mobile environment. The presence service denotes a service for transferring state information, which is previously stored for indicating communication availability, when a user having registered as a buddy requests for the state information. The presence service may utilize communication mechanisms, such as instant messaging (M), VoIP, mobile phone, e-mail and the like.

While the presence service is executed, if the mobile terminal has lost (missed) an access network, a battery is detached, or the like, a state information inconsistency may occur between the mobile terminal and a server. The state information inconsistency may occur very frequently in the mobile environment than in a typical wired environment. Upon the state information inconsistency between the mobile terminal and the server, the mobile terminal may notify (inform) the user of incorrect state information until before the corresponding condition is overcome.

However, no standardized alternative has currently been proposed for the state information inconsistency between the mobile terminal and the server. Furthermore, an approach for overcoming the state information inconsistency may be sought by cooperation between an access network at which the server is located and a presence server; however, any detailed technical specification has not been brought up.

### SUMMARY OF THE INVENTION

Therefore, an object of the present invention is to provide a mobile terminal capable of effectively displaying (representing, indicating) buddy information to a user up a state information inconsistency between the mobile terminal and a server, and a buddy information displaying method thereof.

To achieve these and other advantages and in accordance with the purpose of the present invention, as embodied and broadly described herein, there is provided a mobile terminal including, a user input unit configured to input a buddy processing request, a display configured to display buddy information on a screen responsive to the buddy processing request, and a controller configured to send the buddy processing request to a server and displaying an indication on the screen when a response is not received from the server within a preset period of time, the indication informing that the buddy processing is currently in progress.

The buddy processing may be one of buddy add, buddy delete, buddy block, buddy unblock and buddy information update, and sent to an instant messaging (IM) server or a buddy list managing server.

The indication informing that the buddy processing is in process may include an indication for distinguishing a buddy, for which a buddy processing is requested, from other buddies.

The indication informing that the buddy processing is in progress may include a gray-processing, a specific color processing and a specific shape addition all for a buddy.

The indication informing that the buddy processing is in progress may be released when a response message is received from the server.

The indication informing that the buddy processing is in progress may be released according to state information received from a presence server if the response is not received.

In one aspect of the present invention, there is provided with a buddy information display method including, requesting a buddy processing from a server, waiting for a response to the buddy processing request from the server, and displaying an indication on a buddy list screen of a messenger when the response is not received from the server within a preset period of time, the indication informing that the buddy processing is in progress.

The buddy processing may be one of buddy add, buddy delete, buddy block, buddy unblock and buddy information update.

The indication informing that the buddy processing is in process may include an indication for distinguishing a buddy, for which a buddy processing is requested, from other buddies.

The indication informing that the buddy processing is in progress may include a gray-processing, a specific color processing and a specific shape addition all for a buddy.

The server may be an instant messaging (IM) server or a buddy list managing server.

The controller may release the indication represented for informing that the buddy processing is in progress when the response is received from the server.

The controller may release the indication, represented for informing that the buddy processing is in progress, according to state information received from a presence server if the response is not received from the server.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal in accordance with one embodiment of the present invention;
FIG. 2 is a front perspective view of the mobile terminal in accordance with the one embodiment of the present invention;
FIG. 3 is a rear perspective view of the mobile terminal in accordance with the one embodiment of the present invention;
FIG. 4 is a block diagram of a wireless communication system operable with the mobile terminal in accordance with the one embodiment of the present invention;
FIG. 5 is a flowchart showing an example of information inconsistency between a mobile terminal and a server under a mobile environment;
FIG. 6 is an exemplary view illustrating buddy information displayed on a messenger with being gray-processed in accordance with an embodiment of the present invention;
FIG. 7 is a signal flowchart showing a buddy information displaying method in a mobile terminal in accordance with an embodiment of the present invention;
FIG. 8 is a network architecture for performing an IM service between a mobile terminal and a server in accordance with the present invention;
FIG. 9 is a signal flowchart showing one example of releasing an indication (gray-processing) informing (notifying) that a buddy processing is ongoing when information inconsistency occurs between a mobile terminal and a server;
FIGS. 10a and 10b are exemplary views showing indicating of inconsistency in accordance with the present invention;
FIG. 11 is a flowchart showing a buddy information displaying method in a mobile terminal upon information inconsistency occurred between a mobile terminal and a server in accordance with one embodiment of the present invention; and
FIG. 12 is a flowchart showing a buddy information displaying method in a mobile terminal upon information inconsistency occurred between a mobile terminal and a server in accordance with another embodiment of the present invention.

### DETAILED DESCRIPTION OF THE INVENTION

Description will now be given in detail of preferred configurations of mobile terminals according to the present invention, with reference to the accompanying drawings. Hereinafter, suffixes "module" and "unit or portion" for components used herein in description are merely provided only for facilitation of preparing this specification, and thus they are not granted a specific meaning or function. Hence, it should be noticed that "module" and "unit or portion" can be used together.

A mobile terminal may be implemented using a variety of different types of terminals. Examples of such terminals include mobile terminals, such as mobile phones, smart phones, notebook computers, digital broadcast terminals, Personal Digital Assistants (PDA), Portable Multimedia Players (PMP), navigators and the like, and stationary terminals, such as digital TVs, desktop computers and the like. The following description assumes that the terminal is a mobile terminal. However, it can be easily understood by those skilled in the art that the configuration according to the following description can be applied to the stationary terminals except for components particularly provided for mobility.

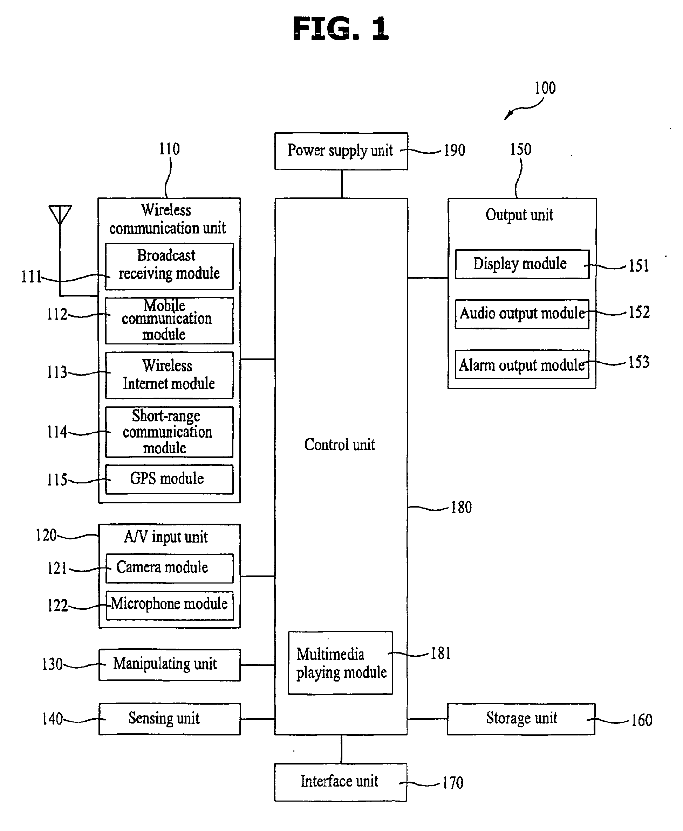

FIG. 1 is a block diagram of a mobile terminal in accordance with one embodiment of the present invention.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply 190 and the like. FIG. 1 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more components which permit wireless communications between the mobile terminal 100 and a wireless communication system or between the mobile terminal 100 and a network within which the mobile terminal 100 is located. For example, the wireless communication unit 110 may include a broadcast receiving module 111, a mobile communication module 112, a wireless internet module 113, a short-range communication module 114, a position location module 115 and the like.

The broadcast receiving module 111 receives a broadcast signal and/or broadcast associated information from an external broadcast managing entity via a broadcast channel. The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. Examples of broadcast associated information may include information associated with a broadcast channel, a broadcast program, a broadcast service provider, and the like. The broadcast signal may be implemented as a TV broadcast signal, a radio broadcast signal, and a data broadcast signal, among others. The broadcast signal may further include a data broadcast signal combined with a TV or radio broadcast signal.

The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video call signal, or various formats of data according to transmission/reception of text/multimedia messages.

The wireless internet module 113 supports wireless Internet access for the mobile terminal. This module may be internally or externally coupled to the mobile terminal. Examples of such wireless Internet access may include Wireless LAN (WLAN) (Wi-Fi), Wireless Broadband (Wibro), World Interoperability for Microwave Access (Wimax), High Speed Downlink Packet Access (HSDPA), and the like.

The short-range communication module 114 denotes a module for short-range communications. Suitable technologies for implementing this module may include BLUETOOTH, Radio Frequency IDentification (RFID), Infrared Data Association (IrDA), Ultra-WideBand (UWB), ZigBee, and the like.

The position location module 115 denotes a module for detecting or calculating a position of a mobile terminal. An example of the position location module 115 may include a Global Position System (GPS) module. Under the current technique, the GPS module can measure accurate time and distance respectively from more than three satellites so as to accurately calculate a current position of the mobile terminal based on such three different distances according to a triangulation scheme. A scheme may be used to obtain time information and distance information from three satellites and correct error by one satellite. Also, the GPS module may continuously calculate a current position in real time so as to obtain speed information.

The AN input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display 151.

The image frames processed by the camera 121 may be stored in the memory 160 or transmitted to the exterior via the wireless communication unit 110. Two or more cameras 121 may be provided according to the configuration of the mobile terminal.

The microphone 122 may receive an external audio signal via a microphone while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data inputted by a user to control the operation of the mobile terminal. The user input unit 130 may include a keypad, a dome switch, a touchpad (e.g., static pressure/capacitance), a jog wheel, a jog switch and the like. A specific example can be one in which the touchpad is layered with the display 151 to be explained later so as to be in cooperation with the display 151, which is referred to as a touch screen.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device, and the like. Here, the sensing unit 140 may include a proximity sensor 141, which will be described later in relation to a touch screen.

The interface unit 170 is generally implemented to couple the mobile terminal to external devices. The interface unit 170 may include, for example, wired/wireless headset ports, external charger ports, wired/wireless data ports, memory card ports, ports for coupling devices having an identification module, etc.), audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), a Universal Subscriber Identity Module (USIM), and the like. Also, the device having the identification module (hereinafter, referred to as 'identification device') may be implemented in a type of smart card. Hence, the identification device can be coupled to the mobile terminal 100 via a port. Such interface unit 170 may receive data from an external device, or provided with power and accordingly transfer the received data or power to each component within the mobile terminal 100 or transfer data of the mobile terminal 100 to an external device.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The output unit 150 is configured to output an audio signal, a video signal or an alarm signal. The output unit 150 may include a display 151, an audio output module 152, an alarm 153, and the like.

The display 151 may output information processed in the mobile terminal 100. For example, when the mobile terminal is operating in a phone call mode, the display 151 will provide a User Interface (UI) or a Graphic User Interface (GUI) which includes information associated with the call. As another example, if the mobile terminal is in a video call mode or a capturing mode, the display 151 may additionally or alternatively display images captured and/or received, UI, or GUI.

Meanwhile, as mentioned above, a touch screen can be configured as the display 151 and the touchpad are layered with each other to work in cooperation with each other. This configuration permits the display 151 to function both as an input device and an output device. The display 151 may be implemented using, for example, a Liquid Crystal Display (LCD), a Thin Film Transistor-Liquid Crystal Display (TFT-LCD), an Organic Light-Emitting Diode (OLED), a flexible display, a three-dimensional (3D) display, or the like. Some of the displays can be configured to be transparent such that it is possible to see the exterior therethrough. These displays may be called transparent displays. A representative example of the transparent display may include a Transparent Organic Light Emitting Diode (TOLED), and the like. The mobile terminal 100 may include two or more of such displays 151 according to its embodiment. For example, the mobile terminal 100 may simultaneously include an external display (not shown) and an internal display (not shown). The touch screen may be configured so as to detect a touch input pressure as well as touch input position and touch input area.

The proximity sensor 141 may be disposed inside the touch screen or near the touch screen. The proximity sensor 141 denotes a sensor for detecting whether there is an object approaching a certain detection surface or existing near the certain detection surface by using a force of an electromagnetic field or infrared rays, without any mechanical contact. Therefore, the proximity sensor 141 has a considerably long lifespan as compared to a contact sensor and also implement considerably high utility.

Examples of the proximity sensor 141 may include a transmission type photo sensor, a direct reflection type photo sensor, a mirror reflection type photo sensor, a high frequency oscillation type proximity sensor, a capacitive proximity sensor, a magnetic proximity sensor, an infrared proximity sensor and the like.

Among others, explaining a principle as to how the high frequency oscillation type proximity sensor operates, when an object to be detected becomes close to a sensor detection surface in a state of oscillating a high frequency from an oscillatory circuit, oscillatory amplitude of the oscillatory circuit is attenuated or stopped. Such change is converted into an electrical signal to detect an existence of the object to be detected. Thus, even if any material other than metal is positioned between the high frequency oscillation type proximity touch and the object to be detected, a proximity switch may detect the object to be detected without any interruption of the material.

Even without the proximity sensor 141 mounted, if an electrostatic touch screen is provided, the proximity of a pointer can be detected based upon the change in an electric field due to the proximity of the pointer.

Therefore, if the pointer is located near the touch screen without being actually contacted with each other, the location of the pointer and the distance (gap) between the pointer and the touch screen can be detected. Hereinafter, for the sake of explanation, a behavior that the pointer is located near the touch screen so as to be recognized as being located above the touch screen is referred to as "proximity touch," and a behavior that the pointer is actually contacted with the touch screen is referred to as "contact touch." Also, the location at which the proximity touch of the pointer is recognized above the touch screen denotes a location at which the pointer is located perpendicularly to the touch screen in case of the proximity touch of the pointer.

The use of the proximity sensor 141 allows the detection of proximity touch and proximity touch patterns (e.g., proximity touch distance, proximity touch direction, proximity touch speed, proximity touch time, proximity touch location, proximity touch movement state and the like), and also allows the output on the touch screen of information related to the detected proximity touch operation and the proximity touch pattern.

The audio output module 152 may output audio data which is received from the wireless communication unit 110 in various modes including call-receiving mode, call-placing mode, recording mode, voice recognition mode, broadcast reception mode, and the like, or audio data stored in the memory 160. Also, the audio output module 152 may output an audio signal relating to a particular function (e.g., call received, message received, etc.) performed in the mobile terminal 100. The audio output module 152 may be implemented using a speaker, a buzzer, or the like.

The alarm 153 may output a signal to inform a generation of event associated with the mobile terminal 100. Typical events may include call received, message received, user input received and the like. In addition to generating the audio or video signal, the alarm 153 may also inform the event generation in different manners, for example, by providing tactile sensations (e.g., vibration) to a user. The alarm 153 may also be configured to vibrate responsive to the mobile terminal receiving a call or message. As another example, vibration is provided by the alarm 153 responsive to receiving user input at the mobile terminal, thus providing a tactile feedback mechanism. Such vibration can also be provided to make a user recognize the event generation. The signal informing the event generation may be outputted via the display 151 or the audio output module 152.

The memory 160 may store a program for the processing and control of the controller 180. Alternatively, the memory 160 may temporarily store input/output data (e.g., phonebook data, messages, still images, video and the like). Also, the memory 160 may store data related to various patterns of vibrations and audio outputted upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, optical disk, and the like. Also, the mobile terminal 100 may operate a web storage which performs the storage function of the memory 160 on the Internet.

The controller 180 typically controls the overall operations of the mobile terminal. For example, the controller 180 performs the control and processing associated with voice calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The power supply 190 provides power required by various components under the control of the controller 180. The provided power may be internal power, external power, or combination thereof.

Various embodiments described herein may be implemented in a computer-readable medium using, for example, software, hardware, or some combination thereof.

For a hardware implementation, the embodiments described herein may be implemented within one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

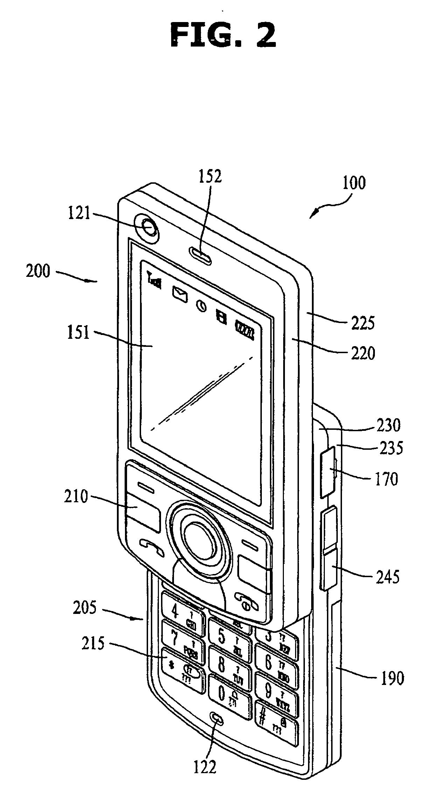

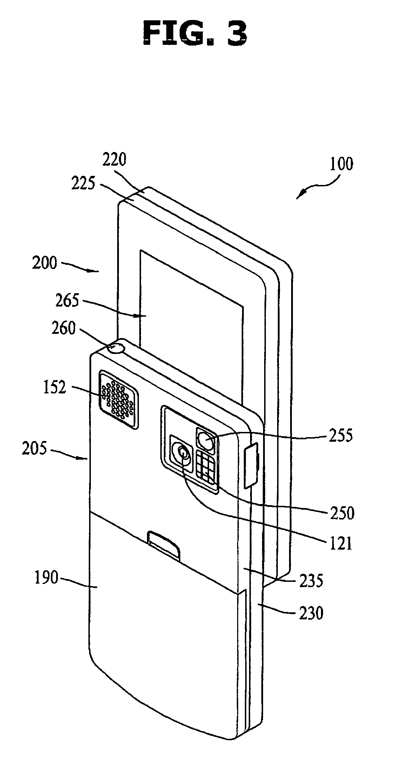

As mentioned above, the internal components of the mobile terminal related to the present invention have been described from the perspective of their functions. Hereinafter, external components of the mobile terminal related to the present invention will be described from the perspective of their functions with reference to FIGS. 2 and 3. The mobile terminal may be implemented in a variety of different configurations. Examples of such configurations include folder type, slide type, bar type, rotating type, swing type or the like. For the sake of brief explanation, further disclosure will primarily relate to a slide-type mobile terminal. However, the present invention may not be limited to the slide-type mobile terminal, but can be applied to other types of terminals including the aforesaid types of terminals.

FIG. 2 is a front perspective view of a mobile terminal in accordance with one embodiment of the present invention.

The mobile terminal 100 of the present invention may comprise a first body 200, and a second body 205 configured to slidably cooperate with the first body 200 in at least one direction. For a folder-type mobile terminal, the mobile terminal 100 may include a first body, and a second body configured to have at least one side folded or unfolded with respect to the first body 200.

The first body 200 is positioned over the second body 205 in a manner that the second body 205 is obscured by the first body 200. This state can be referred to as a closed configuration (position). As illustrated in FIG. 2, the state where the first body 200 exposes at least part of the second body 205 can be referred to as an open configuration (position).

In the meantime, the mobile terminal according to the present invention, although not shown in the drawing, may be a folder-type mobile terminal including a first body and a second body having one side folded or unfolded with respect to the first body. Here, the folded state of the second body can be referred to as the closed configuration, whereas the unfolded state of the second body can be referred to as the open configuration.

In addition, the mobile terminal according to the present invention, although not shown in the drawing, may be a swing-type mobile terminal including a first body and a second body capable of being swung with respect to the first body. Here, the state that the first body is overlapped with the second body can be referred to as the closed configuration whereas the state that the second body is swung thus to make the first body partially exposed can be referred to as the open configuration.

Even if any separate description is not given of the folder-type mobile terminal and the swing-type mobile terminal, it can be easily understood by those skilled in the art and thus a detailed description thereof will not be repeated.

The mobile terminal 100 may be operable in a standby (idle) mode when in the closed configuration, but this mode can be released by the user's manipulation. Also, the mobile terminal 100 may typically be operable in an active (phone call) mode in the open configuration. Here, this mode may be changed into the idle mode according to the user's manipulation or after a certain time elapses.

A case (housing, casing, cover, etc.) forming the outside of the first body 200 is formed by a first front case 220 and a first rear case 225. Various electronic components may be disposed in a space between the first front case 220 and the first rear case 225. One or more intermediate cases may additionally be disposed between the first front case 220 and the first rear case 225.

The cases can be formed of resin in a manner of injection molding, or formed using metallic materials such as stainless steel (STS) and titanium (Ti).

A display 151, an audio output module 152, a camera 121 or a first user input unit 210 may be disposed at the first front case 220 of the first body 200.

The display 151 has been described in connection with FIG. 1, so its detailed description will not be repeated for the sake of brief explanation.

The audio output module 152 may be implemented as a speaker.

The camera 121 may be implemented to be suitable for a user to capture still images or video.

Like the first body 200, a case configuring the outside of the second body 205 may be formed by a second front case 230 and a second rear case 235.

The second user input unit 215 may be disposed at the second body 205, in detail, at a front face of the second front case 230.

A third user input unit 245, a microphone 122 and an interface unit 170 may be disposed either at the second front case 230 or at the second rear case 235.

The first to third user input units 210, 215 and 245 may be named as a user input unit 130. Any tactile manner that a user can touch, e.g., the display 151, for manipulation can be employed for the user input unit 130.

For example, the user input unit 130 can be implemented as a dome switch or touchpad which a user can input information in a pushing or touching manner, or implemented in a manner of using a wheel, a jog or a joystick to rotate keys.

Regarding each function, the first user input unit 210 is used for inputting commands such as START, END, SCROLL or the like, and the second user input unit 215 is used for inputting numbers, characters, symbols, or the like. The first user input unit 210 may include so-called soft keys used in cooperation with icons displayed on the display 151, and navigation keys (usually composed of four navigation keys and a central key) for indicating and confirming an orientation.

Also, the third user input unit 245 can be operated as a hot key for activating a specific function within the mobile terminal.

The microphone 122 may be implemented to be suitable for receiving user's voice or various sounds.

The interface unit 170 may be used as a passage through which the terminal related to the present invention can exchange data or the like with an external device. The interface unit 170 has been described in connection with FIG. 1, so its detailed description will be omitted.

The power supply 190 may be disposed at a side of the second rear case 235 to provide power to the mobile terminal.

The power supply 190 may be a rechargeable battery, for example, to be aftachable/detachable for charging.

FIG. 3 is a rear perspective view of the mobile terminal of FIG. 2.

As shown in FIG. 3, a camera 121 may further be disposed at a rear face of the second rear case 235 of the second body 205. The camera 121 of the second body 205 faces a direction which is opposite to a direction faced by the camera 121 of the first body 200, and may have different pixels from those of the camera 121 of the first body 200.

For example, the camera 121 of the first body 200 may operate with relatively lower pixels (lower resolution). Thus, the camera 121 of the first body 200 may be useful when a user can capture his face and send it to another party during a video call or the like. On the other hand, the camera 121 of the second body 205 may operate with a relatively higher pixels (higher resolution) such that it can be useful for a user to obtain higher quality pictures for later use.

A flash 250 and a mirror 255 may additionally be disposed adjacent to the camera 121 of the second body 205. The flash 250 operates in conjunction with the camera 121 of the second body 250 when taking a picture using the camera 121 of the second body 205. The mirror 255 can cooperate with the camera 121 of the second body 205 to allow a user to photograph himself in a self-portrait mode.

The second rear case 235 may further include an audio output module 152.

The audio output module 152 of the second body 205 can cooperate with the audio output module 152 of the first body 200 to provide stereo output. Also, the audio output module 152 may be configured to operate as a speakerphone.

A broadcast signal receiving antenna 260 may be disposed at one side of the second rear case 235, in addition to an antenna for communications. The antenna 260 can be configured to retract into the second body 205.

One part of a slide module 265 which allows the first body 200 to be slidably coupled to the second body 205 may be disposed at the first rear case 225 of the first body 200.

The other part of the slide module 265 may be disposed at the second front case 230 of the second body 205, such that it may not be exposed to the exterior as illustrated in the drawing of the present invention.

As such, it has been described that the camera 121 is disposed at the second body 205; however, the present invention may not be limited to the configuration.

For example, it is also possible that one or more of those components (e.g., 260, 121∼250, 152, etc.), which have been described to be implemented on the second rear case 235, such as the camera 121, will be implemented on the first body 200, particularly, on the first rear case 225. In this configuration, the component(s) disposed on the first rear case 225 can be protected by the second body 205 in a closed position of the mobile terminal. In addition, without the camera 121 of the second body 205, the camera 121 of the first body 200 can be implemented to be rotatable so as to rotate up to a direction which the camera 121 of the second body 205 faces.

The mobile terminal 100 of FIGS. 1 to 3 may be configured to operate within a communication system which transmits data via frames or packets, including both wireless and wireline communication systems, and satellite-based communication systems.

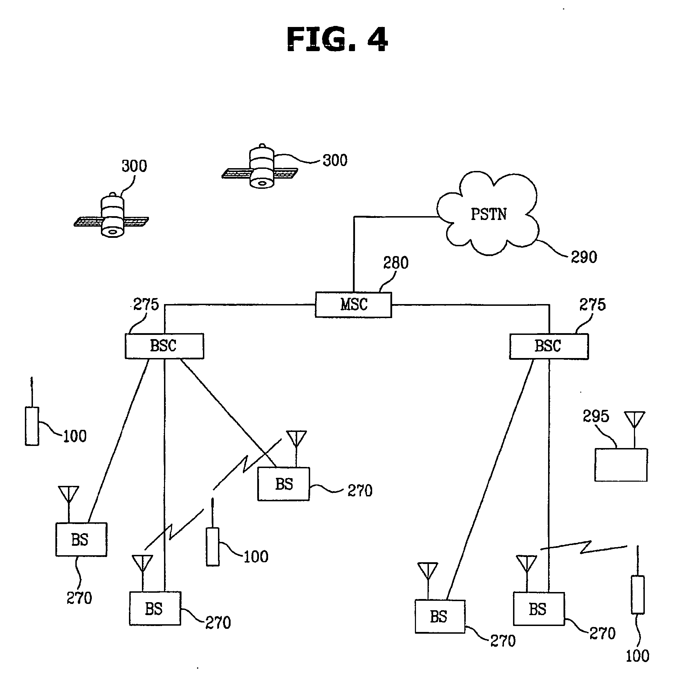

Hereinafter, a communication system within which the mobile terminal related to the present invention can operate will be described with reference to FIG. 4.

Such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like. By way of non-limiting example only, further description will relate to a CDMA communication system, but such teachings apply equally to other system types including the CDMA wireless communication system.

Referring now to FIG. 4, a CDMA wireless communication system is shown having a plurality of mobile terminals 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in FIG. 4.

Each base station 270 may include one or more sectors, each sector having an omni-directional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in FIG. 4, transmits a broadcast signal to the mobile terminals 100 operating within the system. The broadcast receiving module 111 (FIG. 1) is typically configured inside the mobile terminal 100 to receive broadcast signals transmitted by the BT 295.

FIG. 4 further depicts several Global Positioning System (GPS) satellites 300. Such satellites 300 facilitate locating the position of at least one of plural mobile terminals 100. Two satellites are depicted in FIG. 4, but it is understood that useful position information may be obtained with greater or fewer satellites than two satellites. The GPS module 115 (FIG. 1) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270. The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

In general, an instant messaging (IM) service is a service for transmitting and receiving messages in real time via a wired or wireless network, and provides various functions, such as a real-time message transmission, e-mail transmission and reception, file sharing, chatting and the like. A user may use the IM service via an instant messenger provided in a mobile terminal.

The instant messenger may be a client software, which informs a terminal user, under a mobile environment, of log-on related information when another user (or a friend) included in a list previously created by the terminal user has logged on a network. When another user sends a message, the instant messenger may also inform the terminal user of the message transmission. Here, the list previously created by the terminal user is referred to as a buddy list, and the buddies indicate other users or friends. The buddy list indicates a list of colleagues, associates or friends desiring to get in touch with using on-line resources, and is frequently used for the purpose of ascertaining whether persons included in the buddy list have accessed a network. The IM service using the instant messenger may perform a variety of functions as follows:
- transmission and reception of SMS text, files, audio data or video data
- transmission and reception of messages in real-time responsive to monitoring of the states of other users
- real-time checking of other users in the buddy list
- various additional services (e.g., advertisements, information channels, etc.) via the instant messenger
- conversation (chatting)

Further, a mobile terminal may receive a presence service under the mobile environment. The presence service denotes a service that a subscription message of a user having registered as a buddy is handled (processed) and registered, and then a message generated when the state of a mobile terminal is changed is notified in the form of a notification (announcement) message. The presence service may utilize communication media, such as instant messaging (IM), VolP, mobile phone, e-mail and the like.

If particular events occurs, for example, a mobile terminal has lost (missed) an access network (e.g., moved out of a service coverage) while the presence service is executed, or a battery is detached during a presence operation, an inconsistency of presence information, i.e., state information may be caused between the mobile terminal and a server (e.g., IM server). The state information inconsistency may occur more frequently in a mobile environment than in a typical wired environment. The state information inconsistency between the mobile terminal and the server may occur in the following cases:
- when requesting for buddy change (e.g., add, delete, block)
- when entering a no-service area (e.g., elevator, tunnel, etc.)
- when cancelling the requested buddy change while handling the request
- when changing buddy information (e.g., state, nickname, age, etc.)
- when moving to another area (e.g., moving to an area other than the no-service area)

The state information inconsistency between the mobile terminal and the server may often occur when the mobile terminal has not received a response message from the server responsive to the buddy processing request.

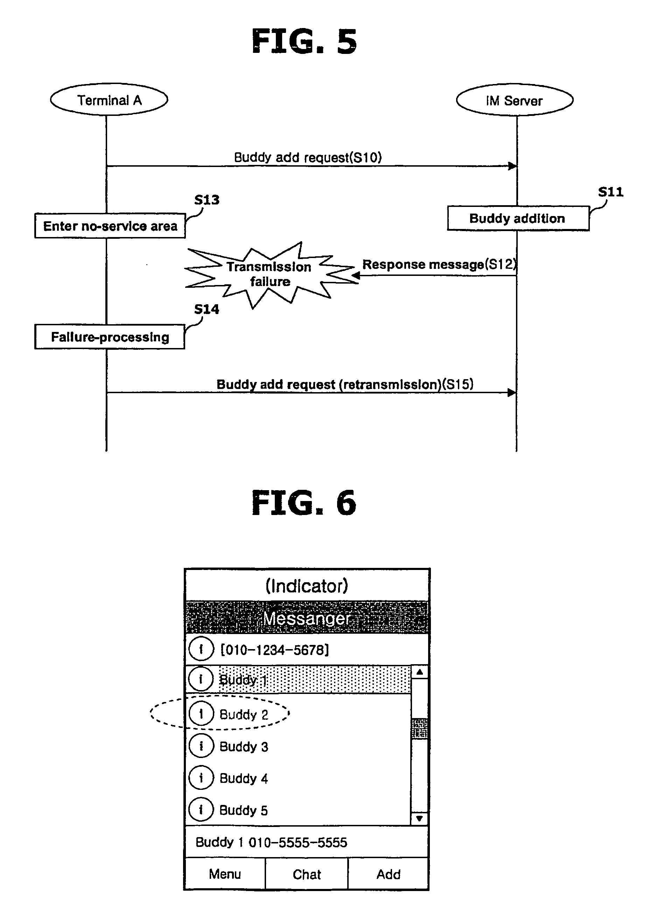

FIG. 5 exemplarily illustrates state information inconsistency between a mobile terminal and a server under a mobile environment, which illustrates that the mobile terminal moves into a no-service area upon adding a buddy.

As shown in FIG. 5, when a user of a mobile terminal A (hereinafter, referred to as 'terminal A') inputs a buddy add request via a user input unit 130, then the controller 180 controls the display 151 to display buddy information, namely, Buddy 2 (i.e., a user of a terminal B) in a buddy list of an instant messenger, and simultaneously transmits a buddy add request message to a buddy list managing server, namely, an IM server (S10).

The IM server having received the buddy add request message then adds Buddy 2 to the buddy list, notifies the addition of Buddy 2 to the terminal B, and sends a response message to the terminal A (S11). Hence, the user (Buddy 2) of the terminal B regards the user of the terminal A as having added him (Buddy 2) to the buddy list.

However, if the terminal A enters a no-service area after sending the buddy add request message (S13), the terminal A is unable to receive the response message sent by the IM server. If the response message is not received from the IM server within a preset period of time, then the controller 180 handles (processes, regards) the "Buddy 2" add request as failed (S15). Accordingly, the controller 180 re-sends the buddy add request message to the IM server to request for the addition of the Buddy 2 (S15). However, if the terminal A keeps staying in the no-service area, the terminal A may not be able to receive the response message responsive to the buddy add request message.

However, in spite of having received no response yet, which notifies that Buddy 2 has been added as a bubby of the terminal A user, Buddy 2 is represented (indicated) as being added on a buddy list screen of the terminal A. That is, in spite of currently executing the addition of Buddy 2, it is represented as if Buddy 2 has been completely added. Accordingly, the user of the terminal A is provided with incorrect (wrong) state information related to Buddy 2. As such, the state information inconsistency frequently occurs when executing the IM service under the mobile environment. Upon the occurrence of state information inconsistency, the user of the terminal A unnecessarily requests for conversation (chatting) from another user or sends a message to the another user.

The present invention provides a method of displaying an indication (notification) informing a user that a buddy processing (handling) is currently in progress when a mobile terminal has not received a response message from a server responsive to the buddy processing. The indication informing that the buddy processing is in progress may be applied not only for state information inconsistency but also for state information consistency.

That is, in the case where the mobile terminal sent the buddy processing request to the server but the server has not successfully received the buddy processing request, since the state information between the mobile terminal and the server still remain in a consistent state, even in this case, the indication informing that the buddy processing is proceeding is displayed on the buddy list screen. Hereinafter, description will be mainly given of the case of state information inconsistency between the mobile terminal and the server.

The method for displaying (representing) an indication as to the ongoing buddy processing may include displaying (indicating) and processing a buddy for which the buddy processing was requested so that the buddy is distinguishable from other buddies. As one example, the present invention may be implemented such that buddy information is gray-processed for displaying until before successfully receiving a response message responsive to the buddy processing request of the mobile terminal. Also, the present invention may also be implemented such that buddy information is processed into a specific color or in a specific shape until before successfully receiving the response message responsive to the buddy processing request of the mobile terminal.

In the present invention, when successfully receiving the response message from the server, the indication informing that the buddy processing is in progress is released. If any response has not been received from the server within a preset period of time, the indication appeared to inform that the buddy processing is in progress is released according to state information received from a presence server.

FIG. 6 is an exemplary view of displaying buddy information with being gray-processed on a messenger in accordance with an embodiment of the present invention.

As shown in FIG. 6, the controller 180 of the mobile terminal displays buddy information by gray-processing the same until before successfully receiving a response message indicating a complete registration from a buddy list managing server (e.g., IM server), responsive to Buddy 2 add request. The gray-processing is released when the response message is successfully received.

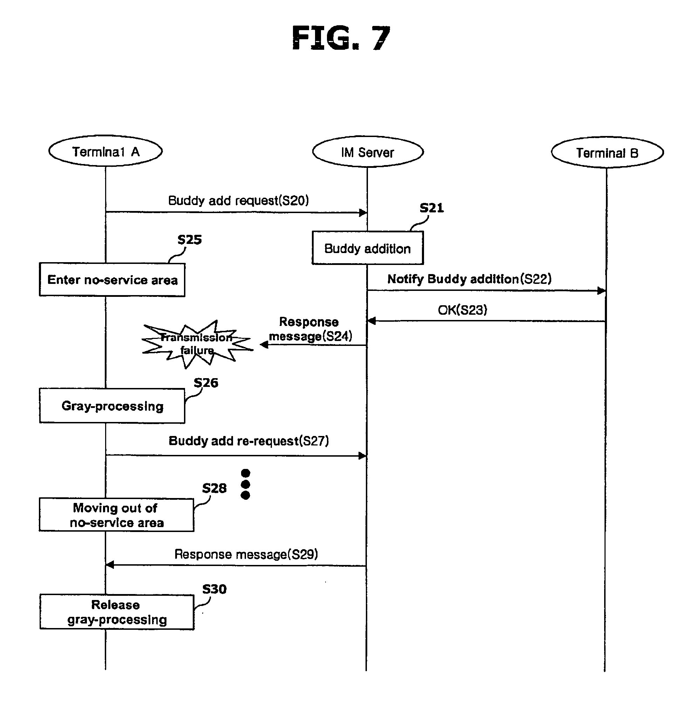

FIG. 7 is a signal flowchart showing a buddy information displaying method in a mobile terminal in accordance with one embodiment of the present invention. FIG. 7 is applied to an example that the mobile terminal enters a no-service area when adding a buddy.

Referring to FIG. 7, if a user having a terminal A adds Buddy 2 (e.g., a user of a terminal B) to a buddy list of an instant messenger, then the controller 180 sends a buddy add request message to an IM server so as to request for the addition of Buddy 2 (S20). After completely adding (or registering) Buddy 2 to the buddy list, the IM server notifies the addition of Buddy 2 to the terminal B (S21, S22 and S23), and then sends a response message indicating the completion of the buddy addition (S24). Therefore, the user (Buddy 2) of the terminal B regards the user of the terminal A as having added him (Buddy 2) to the buddy list.

However, if the terminal A is moved into a no-service area after sending the buddy add request message (S25), then the terminal A is unable to receive the response message sent by the IM server. If not receiving the response message from the IM server within a preset period of time, the controller 180 of the terminal A considers the "Buddy 2" add request as failed, and then performs a gray-processing for Buddy 2 displayed on the messenger as shown in FIG. 6 (S26). That is, since the controller 180 of the terminal A has not received the response to the "Buddy 2" add request from the IM server, the controller 180 gray-processes Buddy 2 to notify the user of the terminal A that Buddy 2 might not be added as a buddy of the terminal A user.

In addition to this, the controller 180 of the terminal A keeps sending a buddy add request message to the IM server to request for the addition of Buddy 2 (S27), and remains "Buddy 2" in the gray-processed state until before successfully receiving a response message from the IM server.

Afterwards, if the terminal A gets out of the no-service area and accordingly successfully receives the response message sent by the IM server (S28 and S29), the controller 180, as shown in FIG. 6, releases the gray-processing for Buddy 2 displayed on the messenger (S30).

As such, in the present invention, upon occurrence of state information inconsistency (erroneous condition) when performing the buddy processing request between the mobile terminal and the server, an indication informing that the buddy processing is proceeding is displayed (represented) to notify a user that state information is not reliable enough yet, resulting in allowing the user to use the mobile terminal based upon correct state information.

Further, the present invention exemplarily illustrated the buddy addition but may not be limited to the case. Alternatively, even in the case where a request, such as buddy delete, buddy block, buddy unblock, buddy information update or the like, was sent to the server but no response has not been received, buddy information may be gray-processed or other indication (notification) mechanism recognizable by a user may be performed (voice output may be available if required). Also, in the present invention, location, state and nickname or the like relating to the terminal A user were changed; however, this implementation may equally be applicable to a case where the terminal B user already knows information before the change related to the terminal A user.

As aforementioned, in the present invention, when state information inconsistency occurs between the mobile terminal and the server, buddy information is gray-processed to indicate that the buddy processing is currently in progress. The buddy information remains in the gray-processed state until successfully receiving the response message from the IM server. However, after sending the buddy add request to the server, if the terminal remains for a long-term period in the aforesaid no-service state or a state similar to that, the buddy information is maintained in the gray-processed state on the messenger. Accordingly, the terminal A user may not reliably perform his desired operation (function), for example, even though there is not any erroneous condition in his state or a state of terminal B of another user.

Therefore, the present invention proposes a method for releasing an indication which has been represented (displayed) to inform (notify) that a buddy processing is in progress at a time when state information inconsistency occurred between a mobile terminal and a server. The present invention describes a method for releasing an indication represented to inform that the buddy processing is in progress, by exemplarily illustrating the gray-processing for the sake of explanation.

The present invention may use the response message of the IM server, as stated above, as a method for releasing gray-processing when the state information inconsistency occurs between a mobile terminal and a server. That is, as shown in FIG. 7, after sending Buddy 2 register request to the IM server, the terminal A performs gray-processing for Buddy 2. Once receiving the response message indicating the complete registration from the IM server, the terminal A then releases the gray-processing for Buddy 2.

Also, the present invention may use information sent from a presence server as a method for releasing gray-processing when state information inconsistency occurs between a mobile terminal and a server.

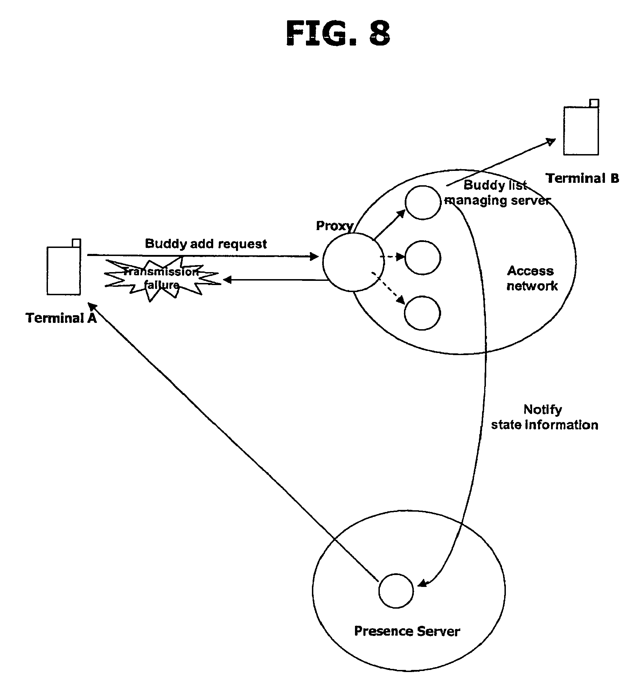

FIG. 8 is a network architecture for performing an IM service between a mobile terminal and a server in accordance with the present invention.

Referring to FIG. 8, the operation and the signal flowchart among terminal A-proxy-IM server-terminal B have already been described with reference to FIG. 7. Also, the present invention may use a buddy list managing server other than the IM server, and the proxy may provide settings for connecting the mobile terminal to each IM server.

Thus, in FIG. 8, if the operation among terminal A-proxy-IM server-terminal B is considered as the first embodiment of a method for releasing an indication (notification) as to the state information inconsistency, the operation among terminal A-proxy-IM server-presence server may be considered as the second embodiment of the method for releasing the indication as to the state information inconsistency.

In other words, after performing a corresponding operation for buddy add/delete/block/unblock request responsive to the request of the terminal A for Buddy 2 (terminal B), the IM server or buddy list managing server should inform the terminal A of the operation result via a response message. Also, the IM server or buddy list managing server may notify the presence server of state information on the terminal B responsive to the buddy add/delete/block/unblock request of the terminal A. The presence server, which is a server for managing subscriber state information, then handles the request (e.g., nickname change/age or state change) of the terminal A (or terminal B), and provides the terminal A with the state information (including on/off state of the messenger) relating to the terminal B notified by the IM server or buddy list managing serer, in form of a notification message.

Accordingly, the controller 180 of the terminal A can release the gray-processing by using the state information provided by the presence server when the response message has not been successfully received from the IM server or buddy list managing server located within an access network (i.e., when state information inconsistency occurs) while a presence service is being undergone under a mobile environment.

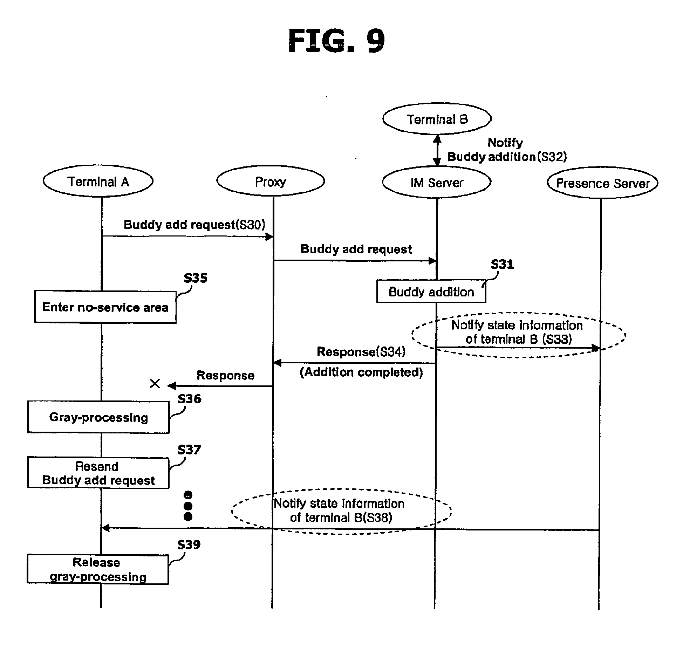

FIG. 9 is a signal flowchart showing an example of releasing an indication (e.g., gray-processing) as to a buddy processing being in progress upon occurrence of state information inconsistency between a mobile terminal and a server.

As shown in FIG. 9, when the terminal A user adds Buddy 2 (i.e., terminal B user) to the buddy list of the instant messenger, then the controller 180 requests for addition of Buddy 2 from the access network by using a buddy add request message (S30). The buddy add request message is input in the IM server via a proxy (or proxy server), and the IM server adds (or registers) Buddy 2 in the buddy list and thereafter notifies the terminal B of the successful addition of Buddy 2 (S31 and S32). Simultaneously, the IM server notifies the presence server that "Buddy 2" has successfully been added (S33), and sends a response message indicating the completion of the addition to the terminal A (S34). Here, FIG. 9 illustrated that the response message was sent after notifying the state information to the presence server; however, the embodiment may not be limited to this, but an approach may be available that the state information may be sent to the presence server after sending the response message.

However, after sending the buddy add request message, if the terminal A moves into a no-service area (S35), the terminal A cannot receive the response message from the IM server. If the response message is not received within a preset period of time, the controller 180 of the terminal A considers the "Buddy 2" add request as being failed, and then gray-processes Buddy 2 displayed on the messenger (S36). That is, since the controller 180 of the terminal A has not received the response to the "Buddy 2" add request from the IM server, the controller 180 gray-processes Buddy 2, so as to notify the user of the terminal A that Buddy 2 might not be added as a buddy of the terminal A user.

Simultaneously, the controller 180 of the terminal A continuously resends the buddy add request message to the IM server to request for the addition of Buddy 2 (S37), and remains "Buddy 2" in the gray-processed state until before successfully receiving the response message from the IM server.

However, the controller 180 of the terminal A may receive state information notified from the presence server as to that "Buddy 2", namely, the terminal B has been successfully added although not receiving the response message from the IM server (S38). This case corresponds to the state information inconsistency between the terminal A and the IM server, accordingly the communication is normally performed between the IM server and the presence server and between the terminal A and the presence server.

Therefore, the controller 180 of the terminal A confirms from the state information sent by the presence server that "Buddy 2" (terminal B) has normally been added. Afterwards, the controller 180 stops sending of the buddy add request message and releases the gray-processing for Buddy 2 displayed (represented) on the messenger (S39).

Thus, the present invention can provide correct buddy information to a user by releasing the indication (gray-processing) informing that the buddy processing is in progress according to state information output from the presence server even if state information inconsistency occurs between the mobile terminal and the server within the access network.

Further, the controller 180 of the terminal A requests for the change in its detailed buddy information (e.g., age, nickname, state, etc.) directly from the presence server, and gray-processes Buddy 2 until before receiving a response to the request. In this case, since a signal processing is undergone regardless of the IM server, as mentioned above, it can be known that operations relating to the buddy list are mostly requested and executed in the IM server.

In the meantime, the present invention described the gray-processing as a method for representing an indication (gray-processing) notifying that a buddy processing is in progress when state information inconsistency occurs between a mobile terminal and a server (e.g., IM server or presence server), with no limit to the example. Any other method may be possible if it is available to represent the indication to be distinguishable from other buddies. As one example, the information may be distinguishably represented by use of a specific effect, e.g., with a star appeared, a color changed, or being twinkled.

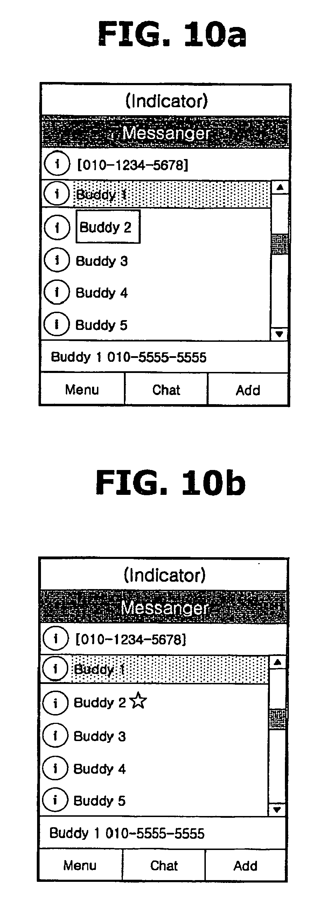

FIGS. 10a and 10b are views showing examples of indicating inconsistency in accordance with the present invention.

FIG. 10a illustrates an example in which Buddy 2 is displayed with a specific color upon the inconsistency of state information related to Buddy 2 between a mobile terminal and a server (e.g., IM server), and FIG. 10b illustrates an example in which a star is appeared at one side of Buddy 2. Accordingly, it is notified to a user that the current information is not reliable enough.

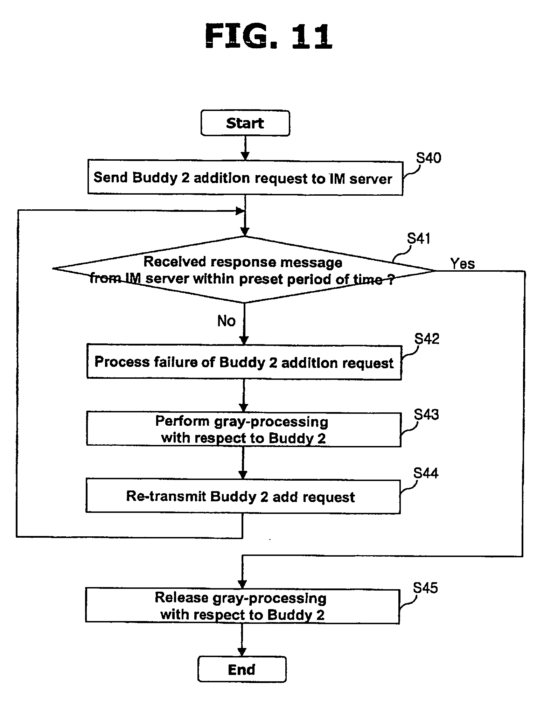

FIG. 11 is a flowchart illustrating a buddy information displaying method in a mobile terminal upon occurrence of state information inconsistency between a mobile terminal and a server in accordance with one embodiment of the present invention, which illustrates an example that the indication of information inconsistency is released by use of a response message upon occurrence of state information inconsistency between a mobile terminal and an IM server.

First, a user inputs a request for a buddy processing (e.g., add, delete, block, unblock, update, etc.) via a user input unit 130. The display 151 then displays a buddy list screen showing buddy information (corresponding to "Buddy 2" in the present invention) responsive to the buddy processing request. The controller 180 sends to a server (e.g., IM server or a particular buddy list managing server) the buddy processing request input via the user input unit 130.

That is, referring to FIG. 11, when the user adds Buddy 2 (e.g., terminal B user) to the buddy list of an instant messenger, the controller 180 of the terminal A requests the IM server within an access network to add Buddy 2 (S40). The buddy add request message is input to the IM server via a proxy (or proxy server). The IM server adds Buddy 2 to the buddy list and thereafter sends a response message to the terminal A.

The controller 180 drives a timer to check whether the response message is sent from the IM server within a preset period of time (S41). If the response message has not been received from the IM server within the preset period of time due to an erroneous situation (e.g., entering no-service area, or other communication errors), the controller 180 manages the Buddy 2 add request as being failed and then gray-processes Buddy 2 displayed on the messenger (S42 and S43).

Afterwards, the controller 180 resends the buddy add request message to the IM server to request for addition of Buddy 2 (S44), and repeats the operation of checking whether the response message is sent from the IM server within the preset period of time (S41). If the response message indicating the successful addition of Buddy 2 is received from the IM server, then the controller 180 releases the gray-processing for Buddy 2 and notifies the user that Buddy 2 has been added as a buddy of the terminal A user (S45).

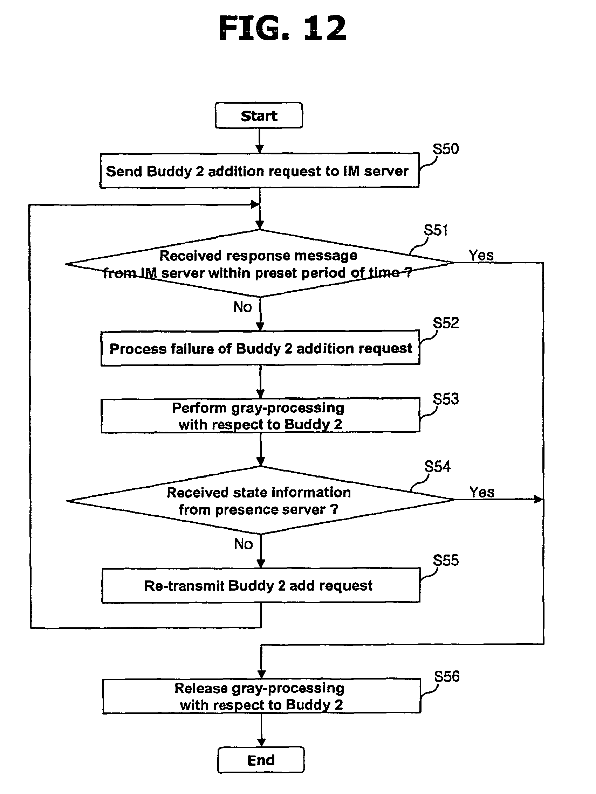

FIG. 12 is a flowchart illustrating a buddy information displaying method in a mobile terminal upon occurrence of state information inconsistency between a mobile terminal and a server in accordance with another embodiment of the present invention, which particularly illustrates an example of releasing the indication notifying that the buddy processing is being undergone by use of state information.

Referring to FIG. 12, when a user adds Buddy 2 (e.g., terminal B user) to the buddy list of the instant messenger, the controller 180 of the terminal A requests the IM server within the access network to add Buddy 2 (S50). The buddy add request message is input to the IM server via a proxy (or proxy server). The IM server adds Buddy 2 to the buddy list and sends a response message to the terminal A so as to notify the presence server that "Buddy 2," namely, the terminal B has successfully been added.

However, if the terminal A moves into a no-service area after sending the buddy add request message, the terminal A cannot receive a response message sent by the IM server. Accordingly, the controller 180 of the terminal A drives a timer to check whether the response message is sent by the IM server within a preset time period (S51). If the response message is not received from the IM server within the preset period of time, the controller 180 handles the Buddy 2 add request as failed, and gray-processes Buddy 2 displayed on the messenger (S52 and S53). That is, because of not receiving the response to the "Buddy 2" add request from the IM server, the controller 180 of the terminal A gray-processes Buddy 2 and notifies the user of the terminal A that Buddy 2 might not be added as a buddy of the terminal A user.

Under this state, the controller 180 checks whether state information is received from a presence server (S54). If the state information is not received, the controller 180 resends the buddy add request message to the IM server so as to request for the addition of Buddy 2 (S55), and repeats the operation of checking whether the response message is received from the IM server within the preset period of time (S51).

On the contrary, if the state information related to the terminal B is received from the presence server or if the response message is received from the IM server at step S51, then the controller 180 releases the gray-processing for Buddy 2, and notifies the user that Buddy 2 has been added as a buddy of the terminal A user (S56).

Therefore, in the present invention, when executing an IM service under a mobile environment, if state information inconsistency occurs between a mobile terminal and a server within an access network, an indication informing that a buddy processing is in progress is appeared, and then when receiving the response message from the IM server or state information from the presence server, the indication is disappeared.

As stated above, in the present invention, when executing an IM service under a mobile environment, if state information inconsistency occurs between a mobile terminal and an IM server, an indication informing that a buddy processing is currently in progress is appeared on a messenger, and the indication is released according to a response message received from the IM server or state information received from a presence server, resulting in effectively providing correct state information to users.

Further, in accordance with one embodiment of the present invention, the method can be implemented as computer-readable codes in a program-recorded medium. The computer-readable medium may include all types of recording devices each storing data readable by a computer system. Examples of such computer-readable media may include ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the mobile terminal.

The configurations and methods of the mobile terminal in the aforesaid embodiments may not be limitedly applied, but such embodiments may be configured by a selective combination of all or part of the embodiments so as to implement many variations.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A buddy information displaying method in a mobile terminal comprising:
requesting a buddy processing to a server;
waiting for a response related to the buddy processing request from the server; and
displaying an indication on a buddy list screen of a messenger, the indication informing that the buddy processing is in progress, when the response is not received from the server within a preset period of time.

2. The method of claim 1, wherein the buddy processing is one of buddy add, buddy delete, buddy block, buddy unblock and buddy information update.

3. The method of claim 1, wherein a buddy for which the buddy processing has been requested is gray-processed if the response is not received within the preset period of time.

4. The method of claim 1, wherein the indication informing that the buddy processing is in progress comprises indication provided to distinguish a buddy, for which a buddy processing is requested, from other buddies, wherein the indication comprises a specific color processing for the buddy processing requested buddy, and a specific shape addition therefor.

5. The method of claim 1, wherein the server comprises an instant messaging (IM) server or a buddy list managing server.

6. The method of claim 1, further comprising:
retransmitting the buddy processing request when the response is not received from the server within the preset period of time; and
releasing the indication informing that the buddy processing is in progress when the response is received from the server.

7. The method of claim 1, further comprising:
providing by the server the result of the buddy processing to a presence server.

8. The method of claim 1, further comprising:
receiving state information from a presence server when the response is not received from the server within the preset period of time, wherein the state information relates to a terminal for which the buddy processing is requested; and
releasing the indication informing that the buddy processing is in progress based upon the received state information.

9. A mobile terminal comprising:
a user input unit configured to input a buddy processing request;
a display configured to display buddy information on a screen; and
a controller configured to send the buddy processing request to a server and displaying an indication on the screen when a response is not received from the server within a preset period of time, the indication informing that the buddy processing is currently in progress.

10. The method of claim 9, wherein the buddy processing is one of buddy add, buddy delete, buddy block, buddy unblock and buddy information update, and the server includes an instant messaging (IM) server or a buddy list managing server.

11. The method of claim 9, wherein the controller gray-processes a buddy, for which the buddy processing has been requested, if the response is not received within a preset period of time.

12. The terminal of claim 9, wherein the indication informing that the buddy processing is in progress further comprises an indication for distinguishing a buddy, for which a buddy processing is requested, from other buddies, wherein the informing that the buddy processing is in progress comprises a gray-processing, a specific color processing, and a specific shape addition all for a buddy.

13. The terminal of claim 11, wherein the controller releases the indication informing that the buddy processing is in progress when the response is received from the server.

14. The terminal of claim 9, further comprising:
a presence server configured to provide the mobile terminal with state information received from the server, the state information relating to a terminal for which the buddy processing is requested.

15. The terminal of claim 9, wherein the controller receives state information from the presence server when the response is not received from the server within the preset period of time, the state information relating to the terminal for which the buddy processing is requested, so as to release the indication informing that the buddy processing is in progress based upon the received state information.
